# EUROPEAN PATENT SPECIFICATION

(11) **EP 3 477 812 B1**
(45) Date of publication and mention of the grant of the patent: **01.07.2020**
(21) Application number: 17826755.5
(22) Date of filing: 20.01.2017
(51) Int. Cl.: H02J 50/12, H02J 7/02, H02J 50/10, H02J 7/04, H02J 50/80, H04B 5/00

(54) **WIRELESS CHARGING CIRCUIT, WIRELESS CHARGING SYSTEM, AND CIRCUIT CONTROL METHOD**
DRAHTLOSE LADESCHALTUNG, DRAHTLOSES LADESYSTEM UND SCHALTKREISSTEUERUNGSVERFAHREN
CIRCUIT DE CHARGE SANS FIL, SYSTÈME DE CHARGE SANS FIL ET PROCÉDÉ DE COMMANDE DE CIRCUIT

(30) Priority: 15.07.2016 CN 201610567324
(43) Date of publication of application: 01.05.2019
(73) Proprietor: Huawei Technologies Co., Ltd., Longgang District Shenzhen, Guangdong 518129 (CN)
(72) Inventor: MAO, Yunhe, Shenzhen Guangdong 518129 (CN)
(74) Representative: Thun, Clemens
(86) International application number: PCT/CN2017/071799
(87) International publication number: WO 2018/010416

(56) References cited:
- EP-A1- 2 808 972
- WO-A1-2015/045058
- CN-A- 101 233 665
- CN-A- 102 130 477
- CN-A- 104 184 218
- CN-A- 104 426 205
- US-A1- 2005 127 868
- US-A1- 2014 225 439

## Description

### TECHNICAL FIELD

The present invention relates to the field of wireless charging technologies, and in particular, to a wireless charging circuit, a wireless charging system, and a circuit control method.

### BACKGROUND

Wireless charging means that a battery-equipped receive end obtains electric power from a transmit end through electromagnetic wave induction, where the transmit end generates an electromagnetic signal, and the receive end senses the electromagnetic signal and generates a current to charge a battery.

Due to different capacities of batteries that need to be charged, an output power of the transmit end and an output power of the receive end need to be adjusted based on a load. In a common output power adjustment method, an impedance matching circuit is added to each of the transmit end and the receive end, capacitance is adjusted by using an adjustable capacitor in the impedance matching circuit, and inductance is adjusted by using an adjustable inductor in the impedance matching circuit, so as to adjust the output power. Specifically, a controllable switch in the adjustable capacitor is connected to a capacitor in series, and whether the capacitor is connected is controlled by turning on or off the controllable switch, so as to adjust the capacitance. A mechanical apparatus or an additional regulation circuit is added to the adjustable inductor, and the inductance is adjusted by changing a bias voltage.

In the foregoing output power adjustment method, if a power electronic device is used as the controllable switch to adjust the capacitance, a conduction loss is large and efficiency is low; and if a relay is used as the controllable switch to adjust the capacitance, impact resistance is limited. Moreover, using a mechanical structure to adjust the inductance increases circuit costs and a volume. In addition, in the foregoing output power adjustment method, the output power can be adjusted only after the additional circuit is added to a system. This not only increases circuit costs and a volume, but also reduces system efficiency and power density.

For example, WO 2015/045058 A1 refers to a wireless power supply system includes a power transmission device provided on a ground side and a power receiving device mounted on a vehicle, the power transmission device transmitting, to the power receiving device via a wireless connection, electric power controlled by an inverter circuit, wherein the power receiving device transmits a power supply command signal to the power transmission device in a first cycle by use of a radio signal. The power transmission device includes a power transmission coil current detection means for detecting a power transmission coil current flowing through a power transmission coil and controls an output voltage of the inverter circuit based on the power supply command signal and the power transmission coil current detected by the power transmission coil current detection means in a second cycle shorter than the first cycle.

Further, US 2014/0225439 A1 refers to a power converter comprising a switch network coupled to an input voltage, a power transformer having a primary winding and a secondary winding, wherein the primary winding is coupled to the switch network, and the secondary winding is coupled to a rectifier, wherein the rectifier is coupled to an output voltage, a primary resonant tank having a first resonant capacitor and a first resonant frequency, and coupled to the primary winding of the power transformer and the switch network, and a regulation circuit configured to control the output voltage of the power converter to be substantially proportional to the input voltage and the switch network to operate at a frequency substantially close to the first resonant frequency.

### SUMMARY

To resolve the problem in the prior art, embodiments of the present invention provide a a wireless charging system. The technical solutions are as follows:

This problem is solved by the subject matter of independent claim 1. Further implementation forms are provided in the dependent claims.

According to a first aspect, a wireless charging circuit is provided, where the wireless charging circuit is applied to a transmit end in a wireless charging system, and includes a direct current (DC)/alternating current (AC) converter connected to a power source, a wireless transmitter and a control component each connected to the DC/AC converter, and a wireless communications component connected to the control component. The power source is configured to provide a direct current voltage. The wireless communications component is configured to receive charging parameters fed back by a receive end in the wireless charging system, where the charging parameters are used to represent a difference between an actual charging parameter and a required charging parameter. The control component is configured to generate, based on the charging parameters, a first drive signal that lasts for first duration, and send the first drive signal to the DC/AC converter; or generate, based on the charging parameters, a second drive signal that lasts for second duration, and send the second drive signal to the DC/AC converter. The DC/AC converter is configured to be in the working state in the first duration under control of the first drive signal, and convert the direct current voltage into a high-frequency alternating current voltage in the working state; or be in a non-working state in the second duration under control of the second drive signal, and skip converting the direct current voltage in the non-working state. The wireless transmitter is configured to convert, into the high-frequency magnetic field, the high-frequency alternating current voltage that is obtained through conversion when the DC/AC converter is in the working state, and transmit the high-frequency magnetic field, where the high-frequency magnetic field is used to charge the battery component.

The transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the transmit end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

With reference to the first aspect, in a first possible implementation of the first aspect, the control component includes a modulation generation component, and the DC/AC converter is a bridge-structure circuit including switching transistors; and the modulation generation component is configured to send the first drive signal that lasts for the first duration to the DC/AC converter, where when the DC/AC converter switches from the non-working state to the working state under control of the first drive signal, a fundamental wave of the high-frequency alternating current voltage and a phase-shift angle between voltages of a front bridge arm and a rear bridge arm of the DC/AC converter linearly increase from zero to a pre-determined value, where the pre-determined value is an angle that enables the DC/AC converter to implement soft switching; or the modulation generation component is configured to send the second drive signal that lasts for the second duration to the DC/AC converter, where when the DC/AC converter switches from the working state to the non-working state under control of the second drive signal, a fundamental wave of the high-frequency alternating current voltage and a phase-shift angle between voltages of a front bridge arm and a rear bridge arm of the DC/AC converter linearly decrease from a pre-determined value to zero, where the pre-determined value is an angle that enables the DC/AC converter to implement soft switching.

When the DC/AC converter switches between the working state and the non-working state, a current keeps linearly increasing or linearly decreasing, so that impact on the wireless charging system in a switching process is reduced, the switching process is quickened, and a loss in the switching process is reduced. In addition, when the DC/AC converter implements soft switching, the average power of the actual load of the receive end is greater than the required power of the load. Therefore, the DC/AC converter switches between the working state and the non-working state, so that the average power of the actual load of the receive end is equal to or close to the required power of the load when the DC/AC converter implements soft switching.

With reference to the first aspect, in a second possible implementation of the first aspect, a quotient of the first duration divided by the second duration is equal to a quotient of a required power of load of the receive end divided by an actual power that is of the receive end when the DC/AC converter is in the working state, where the required power is a power that is required by the load in a charging process. The duration of the drive signal of the DC/AC converter of the transmit end is associated with the power of the receive end, so that when the DC/AC converter intermittently works, the output power of the wireless charging system meets the power that is required by the load in the charging process.

With reference to the first aspect, the first possible implementation of the first aspect, or the second possible implementation of the first aspect, in a third possible implementation of the first aspect, the charging parameters include a required voltage value, a required current value, a sampled current value, and a sampled voltage value, and the required voltage value is a voltage value that is required by the load of the receive end in the charging process; the control component includes a calculation component and the modulation generation component, and the modulation generation component is any one of a pulse width modulation (Pulse Width Modulation, PWM) control component, a frequency modulation control component, and a phase-shift control component; the calculation component is configured to generate a first control instruction based on the charging parameters when the required voltage value is less than the sampled voltage value or the required current value is less than the sampled current value; or generate a second control instruction based on the charging parameters when the required voltage value is greater than the sampled voltage value or the required current value is greater than the sampled current value; and the modulation generation component is configured to generate the first drive signal according to the first control instruction, and send the first drive signal to the DC/AC converter; or is configured to generate the second drive signal according to the second control instruction, and send the second drive signal to the DC/AC converter.

With reference to the second possible implementation of the first aspect, in a fourth possible implementation of the first aspect, the DC/AC converter includes four switching transistors; when a first switching transistor and a fourth switching transistor are in a first state, and a second switching transistor and a third switching transistor are in a second state, the DC/AC converter is in the working state; when the first switching transistor and the third switching transistor are in the first state, and the second switching transistor and the fourth switching transistor are in the second state, the DC/AC converter is in the non-working state; and the first state is an on state, and the second state is an off state; or the first state is an off state, and the second state is an on state.

With reference to the first aspect, the first possible implementation of the first aspect, the second possible implementation of the first aspect, the third possible implementation of the first aspect, or the fourth possible implementation of the first aspect, in a fifth possible implementation of the first aspect, the wireless charging circuit further includes a compensator, and the compensator is located between the DC/AC converter and the wireless transmitter; and the compensator is configured to compensate for the high-frequency alternating current voltage output by the DC/AC converter, and output the stable high-frequency alternating current voltage to the wireless transmitter. The compensator compensates for the high-frequency alternating current voltage, so that the wireless transmitter outputs the stable high-frequency alternating current voltage. In this way, the receive end can receive the stable high-frequency alternating current voltage.

According to a second aspect, a wireless charging circuit is provided, where the wireless charging circuit is applied to a receive end in a wireless charging system, and includes a wireless receiver, an AC/DC converter connected to the wireless receiver, a controller, and a wireless communications component connected to the controller. The wireless receiver is configured to receive a high-frequency magnetic field transmitted by a transmit end in the wireless charging system, and convert the high-frequency magnetic field into a high-frequency alternating current voltage. The AC/DC converter is configured to convert the high-frequency alternating current voltage into a direct current voltage, to charge a connected battery component. The controller is configured to receive charging parameters that are generated by a battery management component based on a battery status of the battery component, and send the charging parameters to the wireless communications component, where the battery management component is connected to the battery component. The wireless communications component is configured to feed back the charging parameters to the transmit end, where the charging parameters are used to represent a difference between an actual charging parameter and a required charging parameter.

The transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

With reference to the second aspect, in a first possible implementation of the second aspect, the charging parameters include a required voltage value, a required current value, a sampled current value, and a sampled voltage value, the required voltage value is a voltage value that is required by load of the receive end in a charging process, and the required current value is a current value that is required by the load of the receive end in the charging process.

With reference to the second aspect or the first possible implementation of the second aspect, in a second possible implementation of the second aspect, the AC/DC converter is a rectifier bridge circuit including diodes; or the AC/DC converter is a synchronous rectification circuit including complementary metal oxide semiconductor (Complementary Metal Oxide Semiconductor, CMOS) transistors.

With reference to the second aspect, the first possible implementation of the second aspect, or the second possible implementation of the second aspect, in a third possible implementation of the second aspect, the wireless charging circuit further includes a compensator, and the compensator is located between the wireless receiver and the AC/DC converter; and the compensator is configured to compensate for the direct current voltage output by the AC/DC module, and output the stable direct current voltage to the battery component. The compensator compensates for the high-frequency alternating current voltage, so that the wireless transmitter outputs the stable high-frequency alternating current voltage. In this way, the receive end can receive the stable high-frequency alternating current voltage.

With reference to the second aspect, the first possible implementation of the second aspect, the second possible implementation of the second aspect, or the third possible implementation of the second aspect, in a fourth possible implementation of the second aspect, the wireless charging circuit further includes a filter, and the filter is located behind the AC/DC converter; and the filter is configured to remove a high-frequency voltage from the direct current voltage. The filter removes the high-frequency voltage from the direct current voltage, to ensure that there is no high-frequency voltage in the direct current voltage used for charging of a charging module, thereby preventing the battery component from being damaged.

According to a third aspect, a wireless charging system is provided, where the system includes a power source, a transmit end connected to the power source, a receive end, a battery component connected to the receive end, and a battery management component connected to both the battery component and the receive end. The transmit end includes the wireless charging circuit provided in at least one of the first aspect or the implementations of the first aspect; and the receive end includes the wireless charging circuit provided in at least one of the second aspect or the implementations of the second aspect.

According to a fourth aspect, a wireless charging circuit control method is provided, where the method is applied to the wireless charging circuit provided in at least one of the first aspect or the implementations of the first aspect, and the method includes: receiving, by using the wireless communications component, charging parameters fed back by a receive end in the wireless charging system, where the charging parameters are used to represent a difference between an actual charging parameter and a required charging parameter; generating, based on the charging parameters by using a control component, the first drive signal that lasts for the first duration, and sending the first drive signal to the DC/AC converter; or generating, based on the charging parameters by using a control component, the second drive signal that lasts for the second duration, and sending the second drive signal to the DC/AC converter; working in the working state in the first duration under control of the first drive signal by using the DC/AC conversion module, and converting the direct current voltage into the high-frequency alternating current voltage in the working state; or working in the non-working state in the second duration under control of the second drive signal by using the DC/AC conversion module, and skipping converting the direct current voltage in the non-working state; and converting, into the high-frequency magnetic field by using the wireless transmitter, the high-frequency alternating current voltage that is obtained through conversion when the DC/AC converter is in the working state, and transmitting the high-frequency magnetic field.

The transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

With reference to the fourth aspect, in a first possible implementation of the fourth aspect, the control component includes a modulation generation component, and the DC/AC converter is a bridge-structure circuit including switching transistors; and the method further includes: sending the first drive signal that lasts for the first duration to the DC/AC converter by using the modulation generation component, where when the DC/AC converter switches from the non-working state to the working state under control of the first drive signal, a fundamental wave of the high-frequency alternating current voltage and a phase-shift angle between voltages of a front bridge arm and a rear bridge arm of the DC/AC converter linearly increase from zero to a pre-determined value, where the pre-determined value is an angle that enables the DC/AC converter to implement soft switching; or sending the second drive signal that lasts for the second duration to the DC/AC converter by using the modulation generation component, where when the DC/AC converter switches from the working state to the non-working state under control of the second drive signal, a fundamental wave of the high-frequency alternating current voltage and a phase-shift angle between voltages of a front bridge arm and a rear bridge arm of the DC/AC converter linearly decrease from a pre-determined value to zero, where the pre-determined value is an angle that enables the DC/AC converter to implement soft switching. When the DC/AC converter switches between the working state and the non-working state, a phase-shift angle is enabled to linearly increase or decrease, and a current keeps linearly increasing or linearly decreasing, so that impact on the wireless charging system in a switching process is reduced, the switching process is quickened, and a loss in the switching process is reduced. In addition, when the DC/AC converter implements soft switching, the average power of the actual load of the receive end is greater than the required power of the load. Therefore, the DC/AC converter switches between the working state and the non-working state, so that the average power of the actual load of the receive end is equal to or close to the required power of the load when the DC/AC converter implements soft switching.

With reference to the fourth aspect, in a second possible implementation of the fourth aspect, a quotient of the first duration divided by the second duration is equal to a quotient of a required power of load of the receive end divided by an actual power that is of the receive end when the DC/AC converter is in the working state, where the required power is a power that is required by the load in a charging process.

The duration of the drive signal of the DC/AC converter of the transmit end is associated with the power of the receive end, so that when the DC/AC converter intermittently works, the output power of the wireless charging system meets the power that is required by the load in the charging process.

With reference to the fourth aspect, the first possible implementation of the fourth aspect, or the second possible implementation of the fourth aspect, in a third possible implementation of the fourth aspect, the charging parameters include a required voltage value, a required current value, a sampled current value, and a sampled voltage value, and the required voltage value is a voltage value that is required by the load of the receive end in the charging process; the control component includes a calculation component and the modulation generation component, and the method further includes: generating a first control instruction based on the charging parameters by using the calculation component when the required voltage value is less than the sampled voltage value or the required current value is less than the sampled current value; or generating a second control instruction based on the charging parameters by using the calculation component when the required voltage value is greater than the sampled voltage value or the required current value is greater than the sampled current value; and generating the first drive signal according to the first control instruction by using the modulation generation component, and sending the first drive signal to the DC/AC converter; or generating the second drive signal according to the second control instruction by using the modulation generation component, and sending the second drive signal to the DC/AC converter.

With reference to the fourth aspect, the first possible implementation of the fourth aspect, the second possible implementation of the fourth aspect, or the third possible implementation of the fourth aspect, in a fourth possible implementation of the fourth aspect, the wireless charging circuit further includes a compensator; and the method further includes: compensating, by using the compensator, for the high-frequency alternating current voltage output by the DC/AC converter, and outputting the stable high-frequency alternating current voltage to the wireless transmitter. The compensator compensates for the high-frequency alternating current voltage, so that the wireless transmitter outputs the stable high-frequency alternating current voltage. In this way, the receive end can receive the stable high-frequency alternating current voltage.

According to a fifth aspect, a wireless charging circuit control method is provided, where the method is applied to the wireless charging circuit provided in at least one of the second aspect or the implementations of the second aspect, and the method includes: receiving, by using the wireless receiver, a high-frequency alternating current magnetic field transmitted by a transmit end in the wireless charging system, and converting the high-frequency magnetic field into a high-frequency alternating current voltage; converting the high-frequency alternating current magnetic field into a direct current voltage by using the AC/DC module, to charge a connected battery component; receiving, by using the controller, charging parameters that are generated by the battery management component based on a battery status of the battery component, and sending the charging parameters to the wireless communications component, where the battery management component is connected to the battery component; and feeding back the charging parameters to the transmit end by using the wireless communications component, where the charging parameters are used to represent a difference between an actual charging parameter and a required charging parameter.

The transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

With reference to the fifth aspect, in a first possible implementation of the fifth aspect, the charging parameters include a required voltage value, a required current value, a sampled voltage value, and a sampled current value, the required voltage value is a voltage value that is required by load of the receive end in a charging process, and the required current value is a current value that is required by the load of the receive end in the charging process.

With reference to the fifth aspect or the first possible implementation of the fifth aspect, in a second possible implementation of the fifth aspect, the wireless charging circuit further includes a compensator; and the method further includes: compensating, by using the compensator, for the direct current voltage output by the AC/DC module, and outputting the stable direct current voltage to the battery component. The compensator compensates for the high-frequency alternating current voltage, so that the wireless transmitter outputs the stable high-frequency alternating current voltage. In this way, the receive end can receive the stable high-frequency alternating current voltage.

With reference to the fifth aspect, the first possible implementation of the fifth aspect, or the second possible implementation of the fifth aspect, in a third possible implementation of the fifth aspect, the wireless charging circuit further includes a filter; and the filter is configured to remove a high-frequency voltage from the direct current voltage. The filter removes the high-frequency voltage from the direct current voltage, to ensure that there is no high-frequency voltage in the direct current voltage used for charging of a charging module, thereby preventing the battery component from being damaged.

### BRIEF DESCRIPTION OF DRAWINGS

FIG. 1 is a schematic structural diagram of a wireless charging system according to an embodiment of the present invention;
FIG. 2 is a schematic structural diagram of another wireless charging system according to an embodiment of the present invention;
FIG. 3 is a schematic structural diagram of another wireless charging system according to an embodiment of the present invention;
FIG. 4 is a schematic structural diagram of another wireless charging system according to an embodiment of the present invention;
FIG. 5 is a schematic structural diagram of another wireless charging system according to an embodiment of the present invention;
FIG. 6A and FIG. 6B are a flowchart of a wireless charging circuit control method;
FIG. 7A-1 and FIG. 7A-2 are a flowchart of another wireless charging circuit control method;

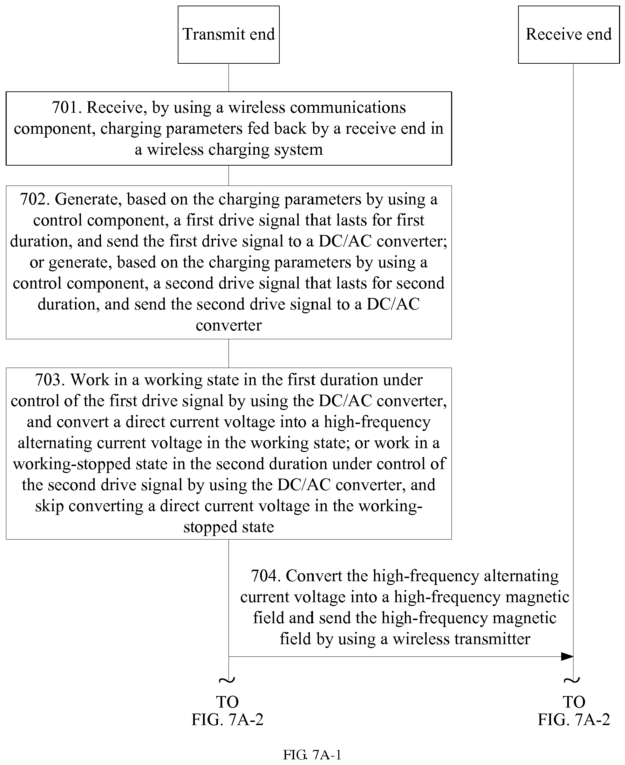

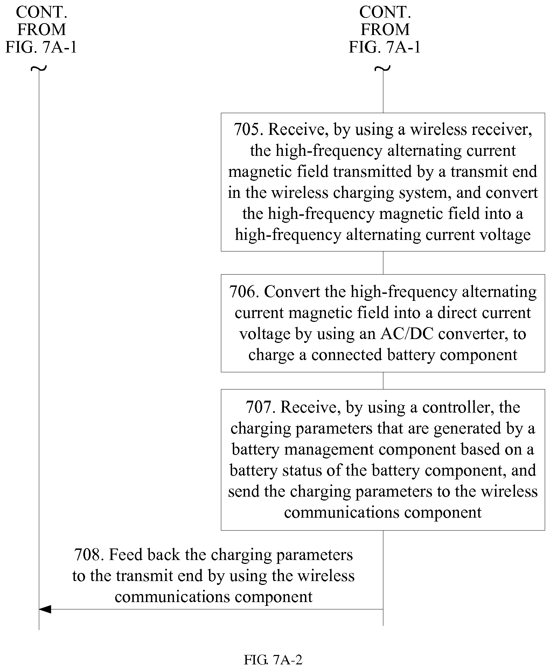

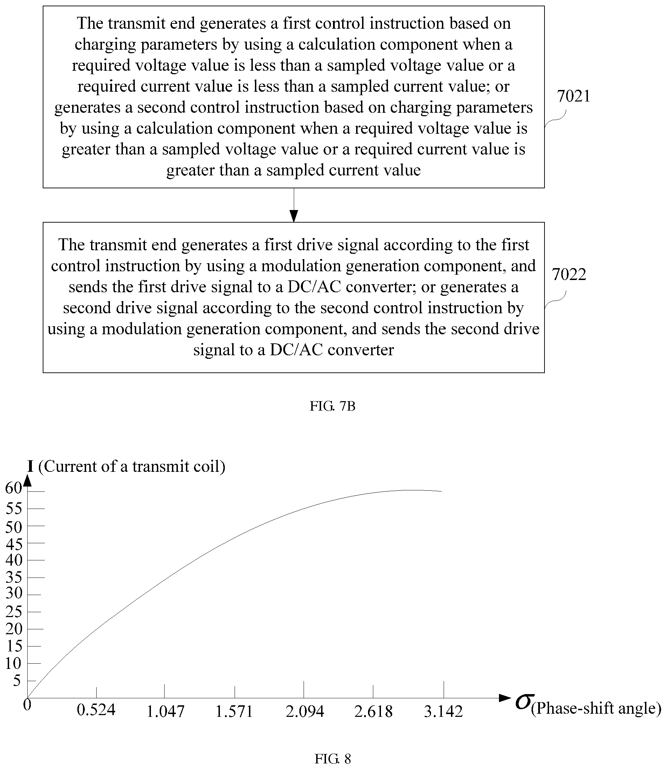

FIG. 7B is a flowchart of another wireless charging circuit control method;
FIG. 8 is a schematic diagram of a relationship between a current of a transmit coil and a phase-shift angle before processing is performed according to an embodiment of the present invention;

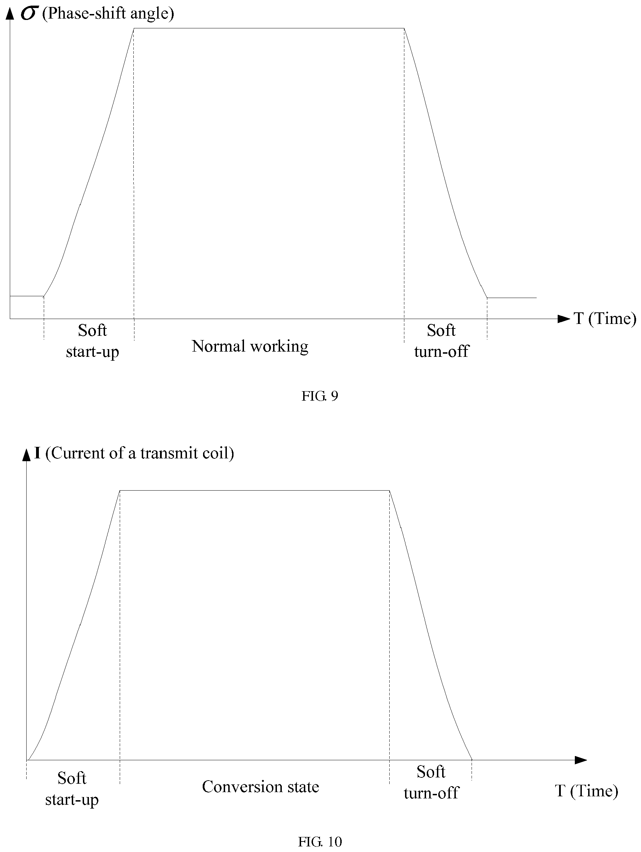

FIG. 9 is a schematic diagram of a relationship between a phase-shift angle and a time according to an embodiment of the present invention; and
FIG. 10 is a schematic diagram of a relationship between a current of a transmit coil and a phase-shift angle after processing is performed according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A "module" mentioned in this specification is a program or an instruction that is stored in a memory and that can implement some functions. A "unit" mentioned in this specification is a functional structure divided based on logic. The "unit" may be implemented by only hardware, or implemented by a combination of software and hardware.

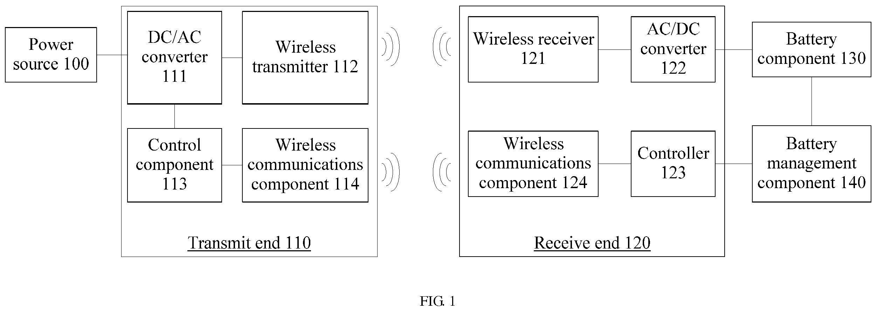

FIG. 1 is a schematic structural diagram of an example of a wireless charging system according to the present invention. The wireless charging system includes a power source 100, a transmit end 110 connected to the power source, a receive end 120, a battery component 130 connected to the receive end 120, and a battery management component 140 connected to both the battery component 130 and the receive end 120.

The power source 100 is configured to provide a direct current voltage.

The transmit end 110 includes a direct current (Direct Current, DC)/alternating current (Alternating Current, AC) converter 111, a wireless transmitter 112 connected to the DC/AC converter 111, a control component 113 connected to the DC/AC converter 111, and a wireless communications component 114 connected to the control component 113.

The wireless communications component 114 is configured to receive charging parameters fed back by the receive end 120 in the wireless charging system, where the charging parameters are used to represent a difference between an actual charging parameter and a required charging parameter. The actual charging parameter is a charging parameter that is actually obtained by the battery management component 140 in a charging process of the battery component 130. The required charging parameter is a charging parameter that is required by the battery component 130 in the charging process of the battery component 130.

The control component 113 is configured to generate, based on the charging parameters, a first drive signal that lasts for first duration, and send the first drive signal to the DC/AC converter 111; or generate, based on the charging parameters, a second drive signal that lasts for second duration, and send the second drive signal to the DC/AC converter 111.

The DC/AC converter 111 is in a working state in the first duration under control of the first drive signal, and converts the direct current voltage into a high-frequency alternating current voltage in the working state; or is in a non-working state in the second duration under control of the second drive signal, and skips converting the direct current voltage in the non-working state.

The wireless transmitter 112 is configured to convert, into a high-frequency magnetic field, the high-frequency alternating current voltage that is obtained through conversion when the DC/AC converter 111 is in the working state, and transmit the high-frequency magnetic field, where the high-frequency magnetic field is used to charge the battery component 130.

The receive end 120 includes a wireless receiver 121, an AC/DC converter 122 connected to the wireless receiver 121, a controller 123, and a wireless communications component 124 connected to the controller 123.

The wireless receiver 121 is configured to receive the high-frequency magnetic field transmitted by the transmit end 110 in the wireless charging system, and convert the high-frequency magnetic field into a high-frequency alternating current voltage.

The AC/DC converter 122 is configured to convert the high-frequency alternating current voltage into a direct current voltage, to charge the connected battery component 130.

The controller 123 is configured to receive the charging parameters that are generated by the battery management component 140 based on a battery status of the battery component 130, and send the charging parameters to the wireless communications component 124. The battery component 130 is connected to the battery management component 140.

The wireless communications component 124 is configured to feed back the charging parameters to the transmit end 110.

During charging of the battery component 130, the battery management component 140 detects the battery status, such as a voltage, a current, or temperature, of the battery component 130, and generates the charging parameters based on the detected battery status. The battery management component 140 sends the generated charging parameters to the controller 123 of the receive end 120.

To sum up, according to a wireless charging circuit provided in this aspect, the transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

Optionally, the charging parameters include a required voltage value, a required current value, a sampled current value, and a sampled voltage value. The required voltage value is a voltage value that is required by load of the receive end in the charging process, for example, a voltage reference value in a constant-voltage charging mode. The required current value is a current value that is required by the load of the receive end in the charging process, for example, a current reference value in a constant-current charging mode, an average current, or a peak current. The sampled current value is a current that passes through the load, and is measured by a current sampling circuit in the battery management component 140. The sampled voltage value is a voltage on the load, and is measured by a voltage sampling circuit in the battery management component 140.

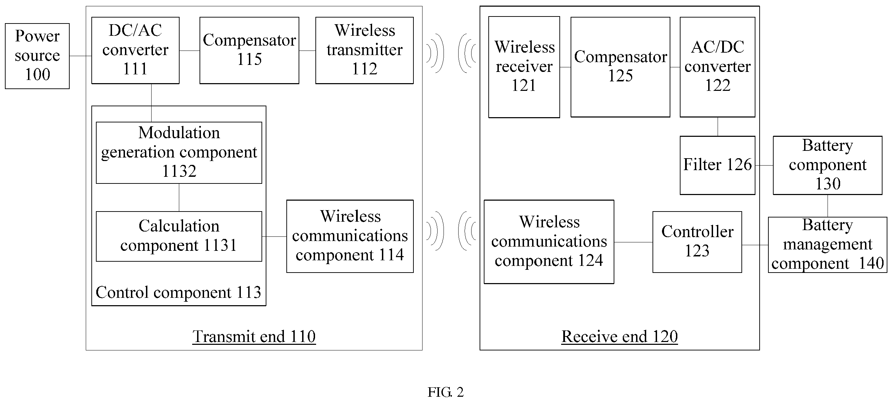

Optionally, as shown in FIG. 2, a wireless charging circuit that is applied to the transmit end in the wireless charging system may further include a compensator 115, and the control component 113 includes a calculation component 1131 and a modulation generation component 1132.

The compensator 115 is located between the DC/AC converter 111 and the wireless transmitter 112. The compensator 115 is configured to compensate for the high-frequency alternating current voltage output by the DC/AC module 111, and output the stable high-frequency alternating current voltage to the wireless transmitter 112.

The calculation component 1131 is configured to generate a first control instruction based on the charging parameters when the required voltage value is less than the sampled voltage value or the required current value is less than the sampled current value; or generate a second control instruction based on the charging parameters when the required voltage value is greater than the sampled voltage value or the required current value is greater than the sampled current value.

The modulation generation component 1132 is configured to generate the first drive signal according to the first control instruction generated by the calculation component 1131, and send the first drive signal to the DC/AC converter 111; or generate the second drive signal according to the second control instruction generated by the calculation component 1131, and send the second drive signal to the DC/AC converter 111.

Optionally, the modulation generation component 1132 is any one of a pulse width modulation (Pulse Width Modulation, PWM) control component, a frequency modulation control component, and a phase-shift control component.

Optionally, as shown in FIG. 2, a wireless charging circuit that is applied to the receive end in the wireless charging system may further include a compensator 125 and a filter 126.

The compensator 125 is located between the wireless receiver 121 and the AC/DC converter 122, and the filter 126 is located behind the AC/DC converter 122.

The compensator 125 is configured to compensate for the direct current voltage output by the AC/DC converter 122, and output the stable direct current voltage to the battery component 130.

The filter 126 is configured to remove a high-frequency voltage from the direct current voltage.

In the foregoing wireless charging circuit that is applied to the transmit end in the wireless charging system, when the DC/AC converter is in the working state under control of the first drive signal, the DC/AC converter converts the direct current voltage into the high-frequency alternating current voltage, namely, the wireless charging system is in the working state; or when the DC/AC converter is in the non-working state under control of the second drive signal, the DC/AC converter does not convert the direct current voltage, namely, the wireless charging system is in the non-working state. The transmit end controls, by using the first drive signal and the second drive signal, the DC/AC converter to switch between the working state and the non-working state, so that the DC/AC converter intermittently works.

A sum of the duration of the first drive signal and the duration of the second drive signal is one intermittent working period of the DC/AC converter. In other words, the sum of the first duration and the second duration is equal to one intermittent working period of the DC/AC converter. A quotient of the duration of the first drive signal divided by the duration of the second drive signal is equal to a quotient of the required power of the load of the receive end divided by an actual power that is of the receive end when the DC/AC converter is in the working state, and the required power is a power that is required by the load in the charging process.

Optionally, the actual power that is of the receive end when the DC/AC converter is in the working state may be obtained through calculation by the battery management component based on the battery status, or may be obtained through calculation by the calculation component of the transmit end based on the charging parameters.

Optionally, at the transmit end in the wireless charging system, the DC/AC converter is a bridge structure including switching transistors. Optionally, the DC/AC converter is a full-bridge structure or a half-bridge structure including switching transistors.

The modulation generation component is configured to send the first drive signal that lasts for the first duration to the DC/AC converter. When the DC/AC converter switches from the non-working state to the working state under control of the first drive signal, a fundamental wave of the high-frequency alternating current voltage and a phase-shift angle between voltages of a front bridge arm and a rear bridge arm of the DC/AC converter linearly increase from zero to a pre-determined value, where the pre-determined value is an angle that enables the DC/AC converter to implement soft switching.

When the DC/AC converter switches from the non-working state to the working state, the fundamental wave of the high-frequency alternating current voltage and the phase-shift angle between the voltages of the front bridge arm and the rear bridge arm of the DC/AC converter linearly increase from zero to the pre-determined value. Therefore, a current on the wireless transmitter linearly increases.

Alternatively, the modulation generation component is configured to send the second drive signal that lasts for the second duration to the DC/AC converter. When the DC/AC converter switches from the working state to the non-working state under control of the second drive signal, a fundamental wave of the high-frequency alternating current voltage and a phase-shift angle between voltages of a front bridge arm and a rear bridge arm of the DC/AC converter linearly decrease from a pre-determined value to zero, where the pre-determined value is an angle that enables the DC/AC converter to implement soft switching.

When the DC/AC converter switches from the working state to the non-working state, the fundamental wave of the high-frequency alternating current voltage and the phase-shift angle between the voltages of the front bridge arm and the rear bridge arm of the DC/AC converter linearly decrease from the pre-determined value to zero. Therefore, a current on the wireless transmitter linearly decreases.

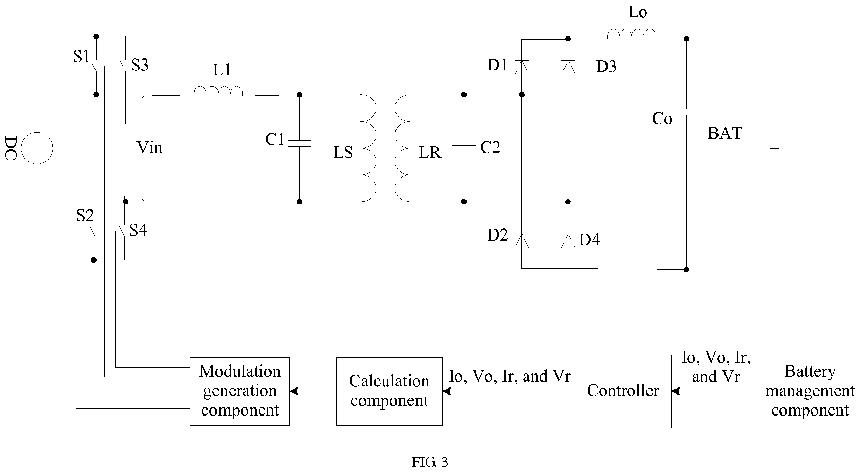

As shown in FIG. 3, for example, a DC/AC converter of a transmit end in a wireless charging system is a full-bridge structure including four power switching transistors, a compensator includes an inductor and a capacitor, and a wireless transmitter is a transmit coil; a wireless receiver of a receive end is a receive coil, a compensator includes a capacitor, an AC/DC converter is a rectifier bridge including four diodes, and a filter includes an inductor and a capacitor.

A power source is a direct current voltage DC. The direct current voltage may be fixed or may be variable.

At the transmit end, the DC/AC converter is the full-bridge structure including the power switching transistors S1 to S4; the compensator includes the inductor L1 and the capacitor C1; the wireless transmitter is an inductor LS; a calculation component generates a first control instruction or a second control instruction; and a modulation generation component generates a first drive signal according to the first control instruction and sends the first drive signal to the DC/AC converter, generates a second drive signal according to the second control instruction and sends the second drive signal to the DC/AC converter, and controls statuses of the power switching transistors S1 to S4 in the DC/AC converter by using the first drive signal and the second drive signal.

The calculation component calculates an error based on a required value and a sampled value of charging parameters, where Error=Required value-Sampled value, and sends the calculated error to a proportional integral (Proportional Integral, PI) controller in the calculation component. The PI controller outputs a value of a duty cycle, limits the value of the duty cycle between 0 and 1, and multiplies the duty cycle by an intermittent working period to obtain working-state duration of the DC/AC converter, namely, first duration. Duration of the second drive signal is the intermittent working period minus the duration of the first drive signal. In other words, the second duration is equal to the intermittent working period minus the first duration. The intermittent working period is a preset value, for example, 10 milliseconds.

When the modulation generation component sends the first drive signal, the DC/AC converter is in the working state. In this case, the first switching transistor S1 and the fourth switching transistor S4 are in an on state, and the second switching transistor S2 and the third switching transistor S3 are in an off state; or the first switching transistor S1 and the fourth switching transistor S4 are in an off state, and the second switching transistor S2 and the third switching transistor S3 are in an on state.

When the modulation generation component sends the second drive signal, the DC/AC converter is in the non-working state. In this case, the first switching transistor S1 and the third switching transistor S3 are in an on state, and the second switching transistor S2 and the fourth switching transistor S4 are in an off state; or the first switching transistor S1 and the third switching transistor S3 are in an off state, and the second switching transistor S2 and the fourth switching transistor S4 are in an on state.

In other words, when the first switching transistor S1 and the fourth switching transistor S3 are in a first state, and the second switching transistor S2 and the third switching transistor S3 are in a second state, the DC/AC converter is in the working state; and when the first switching transistor S1 and the third switching transistor S3 are in the first state, and the second switching transistor S2 and the fourth switching transistor S4 are in the second state, the DC/AC converter is in the non-working state, where the first state is the on state, and the second state is the off state; or the first state is the off state, and the second state is the on state.

At the receive end, the wireless receiver is LR, the compensator comprises the capacitor C2, the AC/DC converter is the diode rectifier bridge including the four diodes, and the filter is the inductor Lo and the capacitor Co.

The receive end is connected to a battery component BAT, and the battery component BAT is connected to a battery management component. The battery management component detects a battery status of the battery component in a charging process, measures a sampled current value by using a current sampling circuit, measures a sampled voltage value by using a voltage sampling circuit, and calculates a required voltage value and a required current value based on the battery status.

When the DC/AC converter of the transmit end is in the working state, the transmit end transmits a high-frequency magnetic field, and the receive end receives the high-frequency alternating current magnetic field transmitted by the transmit end. Because there is a specific distance between the receive end and the transmit end, the high-frequency alternating current magnetic field received by the receive end is related to the distance between the receive end and the transmit end. A smaller distance indicates a larger received high-frequency alternating current magnetic field, and a larger distance indicates a smaller received high-frequency alternating current magnetic field. The receive end converts the received high-frequency alternating current magnetic field into a direct current voltage, to charge the battery component BAT. The battery management component detects the battery status of the battery component BAT, measures the sampled voltage value and the sampled current value, and calculates the required voltage value and the required current value. The battery management component sends the sampled voltage value and the required voltage value to the controller, or sends the sampled current value and the required current value to the controller, or sends the sampled voltage value, the sampled current value, the required voltage value, and the required current value to the controller. The controller receives charging parameters sent by the battery management component, and feeds back the charging parameters to the transmit end. The calculation component of the transmit end generates the first control instruction or the second control instruction based on the charging parameters. The modulation generation component generates the first drive signal according to the first control instruction or generates the second drive signal according to the second control instruction, uses the first drive signal to control the DC/AC converter to be in the working state, or uses the second drive signal to control the DC/AC converter to be in the non-working state, so that the DC/AC converter intermittently works, thereby effectively adjusting an output power of the transmit end, and further making an average power of load of the receive end equal to or close to a required power of the load.

Optionally, the AC/DC converter is a synchronous rectification circuit including complementary metal oxide semiconductor (Complementary Metal Oxide Semiconductor, CMOS) transistors.

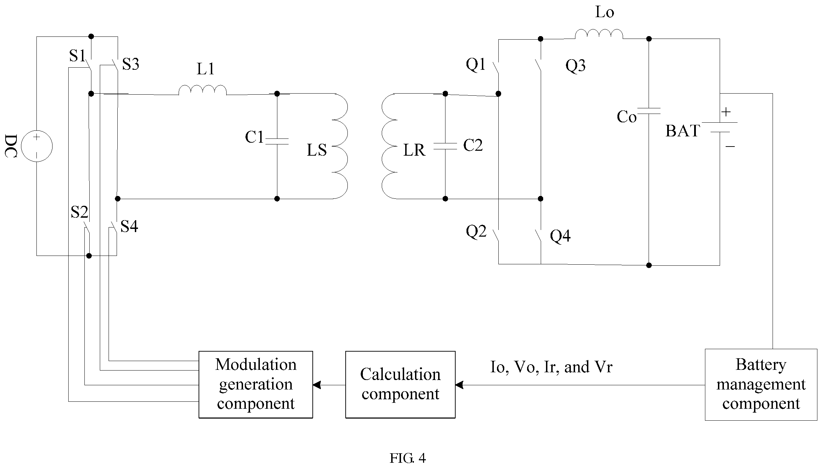

In the wireless charging system shown in FIG. 3, in a wireless charging circuit applied to the receive end, the AC/DC converter is the rectifier bridge structure including the four diodes. Because the diodes have high conduction voltage drop and a large conduction loss, controllable switches may be used to replace the diodes, to implement a synchronous rectification function and improve efficiency. In other words, as shown in FIG. 4, the four diodes in FIG. 3 are replaced by four controllable switches Q1 to Q4.

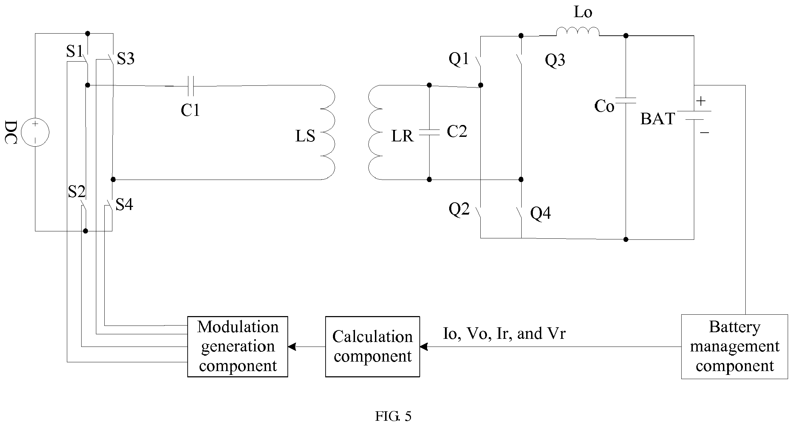

Further, in the wireless charging system, in addition to a structure shown in FIG. 3 and FIG. 4, the compensator of the transmit end and the compensator of the receive end may be alternatively another structure including an inductor and a capacitor, for example, a parallel structure including an inductor and a capacitor, or a series structure including an inductor and a capacitor, or a series-parallel structure including an inductor, an inductor, and a capacitor, or a series-parallel structure including an inductor, a capacitor, and a capacitor. Further, a structure of the compensator of the transmit end may be the same as or different from that of the compensator of the receive end. FIG. 5 is a schematic structural diagram of a wireless charging circuit in another wireless charging system.

It should be noted that, an AC/DC converter of a receive end in FIG. 5 may also be a rectifier bridge structure including four diodes.

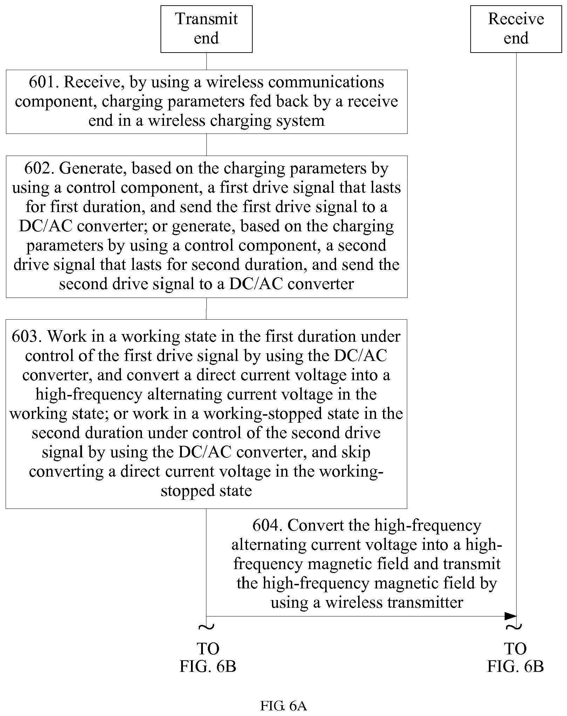

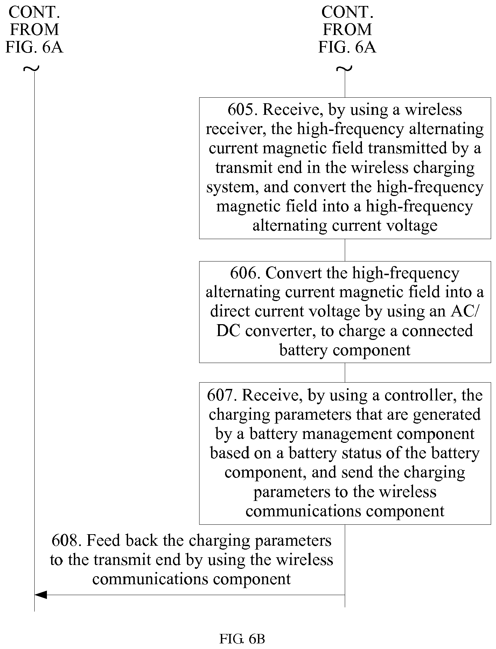

FIG. 6A and FIG. 6B are a flowchart of an example of a wireless charging circuit control method according to the present invention. The flowchart of the wireless charging circuit control method is applicable to the transmit end and the receive end in the wireless charging system shown in FIG. 1 or FIG. 2. The wireless charging circuit control method includes the following steps.

Step 601: The transmit end receives, by using a wireless communications component, charging parameters fed back by the receive end in the wireless charging system.

The charging parameters are used to represent a difference between an actual charging parameter and a required charging parameter.

The transmit end transmits a high-frequency magnetic field by using a wireless transmitter. After receiving the high-frequency magnetic field, the receive end converts the high-frequency magnetic field into a direct current voltage, to charge a battery component. The receive end feeds back, to the transmit end, the charging parameters that are obtained by a battery management component in a charging process of the battery component. The transmit end receives the charging parameters by using the wireless communications component.

Step 602: The transmit end generates, based on the charging parameters by using a control component, a first drive signal that lasts for first duration, and sends the first drive signal to a DC/AC converter; or generates, based on the charging parameters by using a control component, a second drive signal that lasts for second duration, and sends the second drive signal to a DC/AC converter.

Step 603: The transmit end works in a working state in the first duration under control of the first drive signal by using the DC/AC converter, and converts a direct current voltage into a high-frequency alternating current voltage in the working state; or works in a non-working state in the second duration under control of the second drive signal by using the DC/AC converter, and skips converting a direct current voltage in the non-working state.

A power source provides the transmit end with the direct current voltage. The direct current voltage may be fixed or may be variable.

When the DC/AC converter is in the working state, the DC/AC converter converts the direct current voltage into the high-frequency alternating current voltage. When the DC/AC converter is in the non-working state, the DC/AC converter does not convert the direct current voltage.

When the DC/AC converter is in the working state, the wireless charging system is in the working state, and when the DC/AC converter is in the non-working state, the wireless charging system is in the non-working state. The DC/AC converter intermittently works under control of the first drive signal and the second drive signal, so that the wireless charging system also intermittently works.

Step 604: The transmit end converts the high-frequency alternating current voltage into a high-frequency magnetic field and transmits the high-frequency magnetic field, by using a wireless transmitter.

Step 605: The receive end receives, by using a wireless receiver, the high-frequency magnetic field transmitted by the transmit end in the wireless charging system, and converts the high-frequency magnetic field into a high-frequency alternating current voltage.

Step 606: The receive end converts the high-frequency alternating current magnetic field into a direct current voltage by using an AC/DC converter, to charge a connected battery component.

Step 607: The receive end receives, by using a controller, the charging parameters that are generated by a battery management component based on a battery status of the battery component, and sends the charging parameters to the wireless communications component.

Step 608: The receive end feeds back the charging parameters to the transmit end by using the wireless communications component.

Step 601 to step 604 may be separately implemented as a method embodiment of the transmit end, and step 605 to step 608 may be separately implemented as a method embodiment of the receive end.

To sum up, according to the wireless charging circuit control method provided in this embodiment outside of the present invention, the transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

FIG. 7A-1 and FIG. 7A-2 are a flowchart of an example of a wireless charging circuit control method according to the present invention. The flowchart of the wireless charging circuit control method is applicable to the transmit end and the receive end in the wireless charging system shown in FIG. 1 or FIG. 2. The wireless charging circuit control method includes the following steps.

Step 701: The transmit end receives, by using a wireless communications component, charging parameters fed back by the receive end in the wireless charging system.

The charging parameters are used to represent a difference between an actual charging parameter and a required charging parameter.

The transmit end transmits a high-frequency magnetic field by using a wireless transmitter. After receiving the high-frequency magnetic field, the receive end converts the high-frequency magnetic field into a direct current voltage, to charge a battery component. The receive end feeds back, to the transmit end, the charging parameters that are obtained by a battery management component in a charging process of the battery component. The transmit end receives the charging parameters by using the wireless communications component.

The charging parameters include a required voltage value, a required current value, a sampled current value, and a sampled voltage value. The required voltage value is a voltage value that is required by load of the receive end in the charging process, for example, a voltage reference value in a constant-voltage charging mode. The required current value is a current value that is required by the load of the receive end in the charging process, for example, a current reference value in a constant-current charging mode, an average current, or a peak current. The sampled current value is a current that passes through the load, and is measured by a current sampling circuit in the battery management component. The sampled voltage value is a voltage on the load, and is measured by a voltage sampling circuit in the battery management component.

Step 702: The transmit end generates, based on the charging parameters by using a control component, a first drive signal that lasts for first duration, and sends the first drive signal to a DC/AC converter; or generates, based on the charging parameters by using a control component, a second drive signal that lasts for second duration, and sends the second drive signal to a DC/AC converter.

Because the DC/AC converter includes four switching transistors, the transmit end sends the first drive signal to the DC/AC converter by using the control component, and uses the first drive signal to control a first switching transistor and a fourth switching transistor to be in a first state, and a second switching transistor and a third switching transistor to be in a second state; or sends the second drive signal to the DC/AC converter by using the control component, and uses the second drive signal to control a first switching transistor and a third switching transistor to be in a first state, and a second switching transistor and a fourth switching transistor to be in a second state. The first state is an on state, and the second state is an off state; or the first state is an off state, and the second state is an on state.

In other words, the transmit end sends the first drive signal to the DC/AC converter by using the control component, and controls the first switching transistor and the fourth switching transistor to be in the on state, and the second switching transistor and the third switching transistor to be in the off state, or controls the first switching transistor and the fourth switching transistor to be in the off state, and the second switching transistor and the third switching transistor to be in the on state; or the transmit end sends the second drive signal to the DC/AC converter by using the control component, and controls the first switching transistor and the third switching transistor to be in the on state, and the second switching transistor and the fourth switching transistor to be in the off state, or controls the first switching transistor and the third switching transistor to be in the off state, and the second switching transistor and the fourth switching transistor to be in the on state.

Because the control component includes a calculation component and a modulation generation component, the step is specifically implemented by the following two steps, as shown in FIG. 7B.

Step 7021: The transmit end generates a first control instruction based on the charging parameters by using the calculation component when a required voltage value is less than a sampled voltage value or a required current value is less than a sampled current value; or generates a second control instruction based on the charging parameters by using the calculation component when a required voltage value is greater than a sampled voltage value or a required current value is greater than a sampled current value.

The calculation component calculates an error based on a required value, a sampled value, and a formula "Error=Required value-Sampled value", and sends the calculated error to a PI controller in the calculation component. The PI controller outputs a value of a duty cycle, limits the value of the duty cycle between 0 and 1, and multiplies the duty cycle by an intermittent working period to obtain working-state duration of the DC/AC converter, namely, first duration. Duration of the second drive signal is the intermittent working period minus the duration of the first drive signal. In other words, the second duration is equal to the intermittent working period minus the first duration. The intermittent working period is a value that is manually set in advance, for example, 10 milliseconds.

Optionally, a quotient of the first duration divided by the second duration is equal to a quotient of a required power of the load of the receive end divided by an actual power that is of the receive end when the DC/AC converter is in the working state, and the required power is a power that is required by the load in the charging process. The first duration and the second duration can be calculated based on a proportional relationship between the first duration and the second duration and an intermittent working period of the DC/AC converter.

Step 7022: The transmit end generates the first drive signal according to the first control instruction by using the modulation generation component, and sends the first drive signal to the DC/AC converter; or generates the second drive signal according to the second control instruction by using the modulation generation component, and sends the second drive signal to the DC/AC converter.

Step 703: The transmit end works in a working state in the first duration under control of the first drive signal by using the DC/AC converter, and converts a direct current voltage into a high-frequency alternating current voltage in the working state; or works in a non-working state in the second duration under control of the second drive signal by using the DC/AC converter, and skips converting a direct current voltage in the non-working state.

A power source provides the transmit end with the direct current voltage. The direct current voltage may be fixed or may be variable.

When the DC/AC converter is in the working state, the DC/AC converter converts the direct current voltage into the high-frequency alternating current voltage, and when the DC/AC converter is in a non-working state, the DC/AC converter does not convert the direct current voltage.

When the DC/AC converter is in the working state, the wireless charging system is in the working state, and when the DC/AC converter is in the non-working state, the wireless charging system is in the non-working state. The DC/AC converter intermittently works under control of the first drive signal and the second drive signal.

Optionally, when the DC/AC converter switches from the non-working state to the working state under control of the first drive signal that lasts for the first duration and that is sent by the modulation generation component, a fundamental wave of the high-frequency alternating current voltage and a phase-shift angle between voltages of a front bridge arm and a rear bridge arm of the DC/AC converter linearly increase from zero to a pre-determined value, where the pre-determined value is an angle that enables the DC/AC converter to implement soft switching, so as to control a current on the wireless transmitter to linearly increase.

Optionally, when the DC/AC conversion module switches from the working state to the non-working state under control of the second drive signal that lasts for the second duration and that is sent by the modulation generation component, a fundamental wave of the high-frequency alternating current voltage and a phase-shift angle between voltages of a front bridge arm and a rear bridge arm of the DC/AC converter linearly increase from zero to a pre-determined value, so as to control a current on the wireless transmitter to linearly decrease.

Detailed descriptions are provided by using the wireless charging circuit of the transmit end in the wireless charging system shown in FIG. 3.

Because the wireless charging system is an underdamped system and is vulnerable to flapping, soft start-up and soft turn-off are needed when the wireless charging system switches between the working state and the non-working state.

In FIG. 3, the DC/AC converter is an H-bridge structure including diodes, and functions to convert the direct current voltage DC into a high-frequency alternating current voltage Vin. When parameters of L1, C1, and LS are properly selected, a current of the transmit coil LS is a controlled current source in direct proportion to a fundamental wave of the high-frequency alternating current voltage Vin, and the fundamental wave amplitude of the high-frequency alternating current voltage Vin is in direct proportion to a phase-shift angle *σ*(σ∈[0,*π*]) between voltages (drive pulses) of a front bridge arm and a rear bridge arm of the H bridge. In a relatively narrow range in which the phase-shift angle is close to *π*, all switching transistors of the H bridge are in a soft switching state.

When the DC/AC converter is in the working state, the phase-shift angle is an angle that keeps soft switching of the H bridge. For example, the angle that keeps soft switching of the H bridge is 165 degrees. When the DC/AC converter is in the non-working state, the phase-shift angle is 0 or close to 0.

Soft switching cannot be implemented in a soft start-up process or a soft turn-off process, and system efficiency is low. Therefore, duration of a switching process should be as short as possible. The phase-shift angle *σ* and the current of the transmit coil LS are in a non-linear relationship, and a gain is unstable. Therefore, the duration of the switching process may be shortened by using a method of compensating for the phase-shift angle. Optionally, a manner such as a single slope linear processing or piecewise linear processing may be used to enable the phase-shift angle *σ* to increase at a fixed speed, namely, enable the phase-shift angle *σ* to linearly change, so that the current of the transmit coil LS can also linearly change.

For the soft start-up process, a relationship between the phase-shift angle *σ* and the current I of the transmit coil LS is shown in FIG. 8. After the phase-shift angle *σ* changes from 0 to be close to an angle that keeps soft start-up of the H bridge, a time for the phase-shift angle *σ* to increase to the angle that keeps soft start-up of the H bridge is very long. To be specific, a change rule between the phase-shift angle *σ* and the time is nonlinear. For example, assuming that the angle that keeps soft start-up of the H bridge is *π*, it takes 0.001s for the phase-shift angle *σ* to change from 0 to an angle close to *π*, and it takes 0.005s for the phase-shift angle *σ* to change from the angle close to *π* to *π*.

For this problem, in the soft start-up process, the phase-shift angle *σ* may be approximately linearly increased from 0 to a specified value. In other words, in the soft start-up process, the phase-shift angle *σ* is enabled to linearly change, thereby enabling the current to linearly increase and implementing fast soft start-up. Correspondingly, in the soft turn-off process, the phase-shift angle *σ* is approximately linearly decreased from the specified value to 0, thereby enabling the current to linearly decrease and implementing fast soft turn-off. The current linearly increases or linearly decreases, so that a loss of the circuit during soft start-up and soft turn-off is decreased. FIG. 9 schematically shows a changing process of the phase-shift angle in the soft start-up process, a normal working process, and the soft turn-off process after compensation processing is performed.

Linear compensation is performed on the phase-shift angle *σ*. The current can still fast increase after the phase-shift angle *σ* reaches the angle that keeps soft switching of the H bridge, so that the current of the transmit coil can keep linearly increasing when the DC/AC converter switches from the non-working state to the working state; and the current can fast decrease when the phase-shift angle *σ* decreases from the specified value to the angle that keeps soft switching of the H bridge, so that the current of the transmit coil can keep linearly decreasing when the DC/AC converter switches from the working state to the non-working state. FIG. 10 schematically shows a changing process of the current of the transmit coil in the soft start-up process, the working state, and the soft turn-off process after linear processing.

Step 704: The transmit end converts the high-frequency alternating current voltage into a high-frequency magnetic field and sends the high-frequency magnetic field, by using a wireless transmitter.

Step 705: The receive end receives, by using a wireless receiver, the high-frequency alternating current magnetic field transmitted by the transmit end in the wireless charging system, and converts the high-frequency magnetic field into a high-frequency alternating current voltage.

Step 706: The receive end converts the high-frequency alternating current magnetic field into a direct current voltage by using an AC/DC converter, to charge a connected battery component.

Before the connected battery component is charged, the receive end compensates, by using a compensator, for the direct current voltage output by the AC/DC converter, removes a high-frequency voltage from the direct current voltage by using a filter, and outputs the stable direct current voltage to the battery component, to charge the battery component.

Step 707: The receive end receives, by using a controller, the charging parameters that are generated by a battery management component based on a battery status of the battery component, and sends the charging parameters to the wireless communications component.

The charging parameters include a required voltage value, a required current value, a sampled current value, and a sampled voltage value.

During charging of the battery component, the battery management component detects the battery status of the battery component, and generates the charging parameters. The battery management component sends the charging parameters to the controller of the receive end, and then the controller of the receive end sends the charging parameters to the wireless transmitter.

Optionally, the charging parameters sent by the battery management component to the controller are the required voltage value and the sampled voltage value, or the required current value and the sampled current value, or the required voltage value, the required current value, the sampled current value, and the sampled voltage value.

Step 708: The receive end feeds back the charging parameters to the transmit end by using the wireless communications component.

Step 701 to step 704 may be separately implemented as a method embodiment of the transmit end, and step 705 to step 708 may be separately implemented as a method embodiment of the receive end.

To sum up, according to the wireless charging circuit control method provided in this embodiment outside of the present invention, the transmit end provides the receive end with the high-frequency alternating current magnetic field; the receive end receives the high-frequency alternating current magnetic field and then converts the high-frequency alternating current magnetic field into the direct current voltage to charge the battery component; the receive end feeds back the charging parameters to the transmit end; the receive end generates, based on the received charging parameters, the first drive signal that lasts for the first duration or the second drive signal that lasts for the second duration, and sends the first drive signal or the second drive signal to the DC/AC converter, so that the DC/AC converter intermittently works under control of the first drive signal and the second drive signal; and the DC/AC converter converts the direct current voltage into the high-frequency alternating current magnetic field under control of the first drive signal, and the wireless charging system has an output power, or the DC/AC converter does not convert the direct current voltage under control of the second drive signal, and the wireless charging system has no output power. A working time of the DC/AC converter is controlled, so that the system switches between the normal working state and the non-working state without adding an additional circuit, thereby resolving a problem that circuit costs and a volume are increased in a prior-art output power adjustment method, and achieving effects of making an average power of actual load of the receive end equal to or close to a required power of the load, improving efficiency of the wireless charging system, and improving power density of the wireless charging system.

Further, when the DC/AC converter switches between the working state and the non-working state, a current keeps linearly increasing or linearly decreasing, so that impact on the wireless charging system in the switching process is reduced, a soft switching process is quickened, and a loss in the switching process is reduced.

In addition, when the DC/AC converter implements soft switching, the average power of the actual load of the receive end is greater than the required power of the load. Therefore, the DC/AC converter switches between the working state and the non-working state, so that the average power of the actual load of the receive end is equal to or close to the required power of the load when the DC/AC converter implements soft switching.

A person of ordinary skill in the art may be aware that, units and algorithm steps in examples described with reference to the embodiments disclosed in this specification may be implemented by electronic hardware or a combination of computer software and electronic hardware. Whether the functions are performed by hardware or software depends on particular applications and design constraints of the technical solutions.

It may be clearly understood by a person of ordinary skill in the art that, for ease and brevity of description, for a detailed working process of the foregoing apparatus and unit, reference may be made to a corresponding process in the foregoing method embodiments, and details are not described herein again.

In the embodiments provided in this application, it should be understood that the disclosed circuit and method may be implemented in other manners. For example, the described apparatus embodiment is merely an example. For example, the unit division may merely be logical function division and may be other division in actual implementation. For example, a plurality of units or components may be combined or may be integrated into another system, or some features may be ignored or not performed.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of the embodiments.

The foregoing descriptions are merely specific implementations of the present invention, but are not intended to limit the protection scope of the present invention. The invention is defined by the features of independent claim 1. Preferred embodiments are defined by the dependent claims.

## Claims

1. A system formed by a wireless charging circuit and a power source (100), wherein the wireless charging circuit is applied to a transmit end in a wireless charging system, the wireless charging system comprising the system formed by the wireless charging circuit and the power source (100), and the wireless charging circuit comprises a direct current DC/alternating current AC converter (111) connected to the power source (100), a wireless transmitter (110) and a control component (113) each connected to the DC/AC converter (111), and a wireless communications component (114) connected to the control component (113), wherein:
o the power source (100) is configured to provide a direct current voltage;
o the wireless communications component (114) is configured to receive charging parameters fed back by a receive end in the wireless charging system, wherein the charging parameters are used to represent a difference between an actual charging parameter and a required charging parameter;
o the control component (113) is configured to generate, based on the charging parameters, a first drive signal that lasts for first duration, and send the first drive signal to the DC/AC converter (111);
or,
generate, based on the charging parameters, a second drive signal that lasts for second duration, and send the second drive signal to the DC/AC converter (111);
o the DC/AC converter (111) is configured to be in the working state in the first duration under control of the first drive signal, and convert the direct current voltage into a high-frequency alternating current voltage in the working state; or be in a non-working state in the second duration under control of the second drive signal, and skip converting the direct current voltage in the non-working state; and
o the wireless transmitter (112) is configured to convert, into a high-frequency magnetic field, the high-frequency alternating current voltage that is obtained through conversion when the DC/AC converter (111) is in the working state, and transmit the high-frequency magnetic field, wherein the high-frequency magnetic field is used to charge a battery component (130);
o wherein the control component (113) comprises a modulation generation component, and the DC/AC converter (111) is a bridge-structure circuit comprising switching transistors; and
▪ the modulation generation component is configured to send the first drive signal that lasts for the first duration to the DC/AC converter (111), wherein when the DC/AC converter (111) switches from the non-working state to the working state under control of the first drive signal, a fundamental wave of the high-frequency alternating current voltage and a phase-shift angle between voltages of a front bridge arm and a rear bridge arm of the DC/AC converter (111) linearly increase from zero to a pre-determined value, wherein the pre-determined value is an angle that enables the DC/AC converter (111) to implement soft switching,
or,
▪ the modulation generation component is configured to send the second drive signal that lasts for the second duration to the DC/AC converter (111), wherein when the DC/AC converter (111) switches from the working state to the non-working state under control of the second drive signal, a fundamental wave of the high-frequency alternating current voltage and a phase-shift angle between voltages of a front bridge arm and a rear bridge arm of the DC/AC converter (111) linearly decrease from a pre-determined value to zero,
wherein the pre-determined value is an angle that enables the DC/AC converter to implement soft switching;
o wherein the DC/AC converter (111) comprises four switching transistors;
when a first switching transistor (S1) and a fourth switching transistor (S4) are in a first state, and a second switching transistor (S2) and a third switching transistor (S3) are in a second state, the DC/AC converter (111) is in the working state; when the first switching transistor (S1) and the third switching transistor (S3) are in the first state, and the second switching transistor (S2) and the fourth switching transistor (S4) are in the second state, the DC/AC converter (111) is in the non-working state; and
the first state is an on state, and the second state is an off state; or the first state is an off state, and the second state is an on state.

2. The system according to claim 1, wherein a quotient of the first duration divided by the second duration is equal to a quotient of a required power of load of the receive end divided by an actual power that is of the receive end when the DC/AC converter is in the working state, and the required power is a power that is required by the load in a charging process.

3. The system according to any one of claims 1 to 2, wherein the charging parameters comprise a required voltage value, a required current value, a sampled current value, and a sampled voltage value, and the required voltage value is a voltage value that is required by the load of the receive end in the charging process;
the control component comprises a calculation component and the modulation generation component, and the modulation generation component is any one of a pulse width modulation PWM control component, a frequency modulation control component, or a phase-shift control component;
the calculation component is configured to generate a first control instruction based on the charging parameters when the required voltage value is less than the sampled voltage value or the required current value is less than the sampled current value; or generate a second control instruction based on the charging parameters when the required voltage value is greater than the sampled voltage value or the required current value is greater than the sampled current value; and
the modulation generation component is configured to generate the first drive signal according to the first control instruction, and send the first drive signal to the DC/AC converter; or is configured to generate the second drive signal according to the second control instruction, and send the second drive signal to the DC/AC converter.

4. The system according to any one of claims 1 to 3, wherein the wireless charging circuit further comprises a compensator, and the compensator is located between the DC/AC converter and the wireless transmitter; and
the compensator is configured to compensate for the high-frequency alternating current voltage output by the DC/AC converter, and output the stable high-frequency alternating current voltage to the wireless transmitter.

## Patentansprüche

1. System, das von einer drahtlosen Ladeschaltung und einer Stromquelle (100) gebildet wird, wobei die drahtlose Ladeschaltung an einen Übertragungsausgang in einem drahtlosen Ladesystem angewendet wird, wobei das drahtlose Ladesystem das System umfasst, das von der drahtlosen Ladeschaltung und der Stromquelle (100) gebildet wird, und die drahtlose Ladeschaltung einen Gleichstrom-/Wechselstrom-Wandler (DC-/AC-Wandler, 111) umfasst, der mit der Stromquelle (100) verbunden ist, einen Drahtlossender (110) und eine Steuerungskomponente (113), die jeweils mit dem DC-/AC-Wandler (111) verbunden sind, und eine drahtlose Kommunikationskomponente (114), die mit der Steuerungskomponente (113) verbunden ist, wobei:
o die Stromquelle (100) so konfiguriert ist, dass sie eine Gleichstromspannung zur Verfügung stellt;
o die drahtlose Kommunikationskomponente (114) so konfiguriert ist, dass sie Ladeparameter erhält, die von einer Empfangsseite im drahtlosen Ladesystem rückgemeldet werden, wobei die Ladeparameter verwendet werden, um eine Differenz zwischen einem tatsächlichen Ladeparameter und einem erforderlichen Ladeparameter wiedergeben;
o die Steuerungskomponente (113) so konfiguriert ist, dass sie basierend auf den Ladeparametern ein erstes Antriebssignal erzeugt, das für eine erste Dauer anhält, und das erste Antriebssignal an den ersten DC-/AC-Wandler (111) sendet;
oder
basierend auf den Ladeparametern ein zweites Antriebssignal erzeugt, das für eine zweite Dauer anhält, und das zweite Antriebssignal an den DC-/AC-Wandler (111) sendet;
o der DC-/AC-Wandler (111) so konfiguriert ist, dass er sich während der ersten Dauer unter der Kontrolle des ersten Antriebssignals im Arbeitszustand befindet und die Gleichstromspannung in eine Hochfrequenz-Wechselstromspannung im Arbeitszustand umwandelt; oder sich während der zweiten Dauer unter der Kontrolle des zweiten Antriebssignals in einem Nicht-Arbeitszustand befindet und im Nicht-Arbeitszustand das Umwandeln der Gleichstromspannung überspringt;
und
o der Drahtlossender (112) so konfiguriert ist, dass er die Hochfrequenz-Wechselstromspannung, die durch das Umwandeln, wenn der DC-/AC-Wandler (111) sich im Arbeitszustand befindet, gewonnen wird, in ein Hochfrequenz-Magnetfeld umwandelt, wobei das Hochfrequenz-Magnetfeld verwendet wird, um eine Batteriekomponente (130) zu laden;
o wobei die Steuerungskomponente (113) eine Modulationserzeugungskomponente umfasst und der DC-/AC-Wandler (111) eine Brückenschaltung ist, die Schalttransistoren umfasst;
und
▪ die Modulationserzeugungskomponente so konfiguriert ist, dass sie das erste Antriebssignal, das für die erste Dauer anhält, an den DC-/AC-Wandler (111) sendet, wobei, wenn der DC-/AC-Wandler (111) unter der Kontrolle des ersten Antriebssignals aus dem Nicht-Arbeitszustand in den Arbeitszustand wechselt, eine Grundwelle der Hochfrequenz-Wechselstromspannung und ein Phasenverschiebungswinkel zwischen Spannungen eines vorderen Brückenarms und eines hinteren Brückenarms des DC-/AC-Wandlers (111) sich linear von null auf einen vorgegebenen Wert erhöhen, wobei der vorgegebene Wert ein Winkel ist, der es dem DC-/AC-Wandler (111) erlaubt, eine Weichschaltung vorzunehmen,
oder
▪ die Modulationserzeugungskomponente so konfiguriert ist, dass sie das zweite Antriebssignal, das für die zweite Dauer anhält, an den DC-/AC-Wandler (111) sendet, wobei, wenn der DC-AC-Wandler (111) unter der Kontrolle des zweiten Antriebssignals aus dem Arbeitszustand in den Nicht-Arbeitszustand wechselt, eine Grundwelle der Hochfrequenz-Wechselstromspannung und ein Phasenverschiebungswinkel zwischen Spannungen eines vorderen Brückenarms und eines hinteren Brückenarms des DC-/AC-Wandlers (111) sich linear von einem vorgegebenen Wert auf null senken, wobei der vorgegebene Wert ein Winkel ist, der es dem DC-/AC-Wandler erlaubt, eine Weichschaltung vorzunehmen;
o wobei der DC-/AC-Wandler (111) vier Schalttransistoren umfasst;
wenn ein erster Schalttransistor (S1) und ein vierter Schalttransistor (S4) in einem ersten Zustand sind und ein zweiter Schalttransistor (S2) und ein dritter Schalttransistor (S3) in einem zweiten Zustand sind, der DC-/AC-Wandler (111) sich im Arbeitszustand befindet;
wenn der erste Schalttransistor (S1) und der dritte Schalttransistor (S3) im ersten Zustand sind und der zweite Schalttransistor (S2) und der vierte Schalttransistor (S4) im zweiten Zustand sind, der DC-/AC-Wandler (111) sich im Nicht-Arbeitszustand befindet; und
der erste Zustand ein Ein-Zustand ist und der zweite Zustand ein Aus-Zustand ist; oder der erste Zustand ein Aus-Zustand ist und der zweite Zustand ein Ein-Zustand ist.

2. System nach Anspruch 1, wobei ein Quotient der ersten Dauer geteilt durch die zweite Dauer einem Quotienten einer erforderlichen Strombelastung der Empfangsseite geteilt durch eine tatsächliche Energie, die die Energie der Empfangsseite ist, wenn der DC-/AC-Wandler sich im Arbeitszustand befindet, entspricht, und die erforderliche Energie eine Energie ist, die von der Belastung im Ladeverfahren gefordert wird.

3. System nach einem der Ansprüche 1 bis 2, wobei die Ladeparameter einen erforderlichen Spannungswert, einen erforderlichen Stromwert, einen abgetasteten Stromwert und einen abgetasteten Spannungswert umfassen und der erforderliche Spannungswert ein Spannungswert ist, der von der Belastung in der Empfangsseite im Ladeverfahren gefordert wird;
die Steuerungskomponente eine Berechnungskomponente und die Modulationserzeugungskomponente umfasst und die Modulationserzeugungskomponente eine von einer Pulsweitenmodulations-, PWM-, steuerungskomponente, einer Frequenzmodulationssteuerungskomponente oder einer Phasenverschiebungssteuerungskomponente ist;
die Berechnungskomponente so konfiguriert ist, dass sie basierend auf den Ladeparametern eine erste Steueranweisung erzeugt, wenn der erforderliche Spannungswert unter dem abgetasteten Spannungswert liegt oder wenn der erforderliche Stromwert unter dem abgetasteten Stromwert liegt; und
die Modulationserzeugungskomponente so konfiguriert ist, dass sie ein erstes Antriebssignal gemäß der ersten Steueranweisung erzeugt und das erste Antriebssignal an den DC-/AC-Wandler sendet; oder so konfiguriert ist, dass die das zweite Antriebssignal gemäß der zweiten Steueranweisung erzeugt und das zweite Antriebssignal an den DC-/AC-Wandler sendet.

4. System nach einem der Ansprüche 1 bis 3, wobei die drahtlose Ladeschaltung ferner einen Kompensator umfasst und der Kompensator sich zwischen dem DC-/AC-Wandler und dem Drahtlossender befindet; und
der Kompensator so konfiguriert ist, dass er die Hochfrequenz-Wechselstromausgangsspannung des DC-/AC.-Wandlers kompensiert und die stabile Hochfrequenz-Wechselstromspannung an den Drahtlossender abgibt.

## Revendications

1. Système formé par un circuit de charge sans fil et une source d'alimentation (100), dans lequel le circuit de charge sans fil est appliqué à une extrémité d'émission dans un système de charge sans fil, le système de charge sans fil comprenant le système formé par le circuit de charge sans fil et la source d'alimentation (100), et le circuit de charge sans fil comprend un convertisseur courant continu CC/courant alternatif CA (111) connecté à la source d'alimentation (100), un émetteur sans fil (110) et un composant de commande (113) connectés chacun au convertisseur CC/CA (111), et un composant de communications sans fil (114) connecté au composant de commande (113), dans lequel :
o la source d'alimentation (100) est conçue pour fournir une tension continue ;
o le composant de communications sans fil (114) est conçu pour recevoir des paramètres de charge réinjectés par une extrémité de réception dans le système de charge sans fil, dans lequel les paramètres de charge sont utilisés pour représenter une différence entre un paramètre de charge réel et un paramètre de charge requis ;
o le composant de commande (113) est conçu pour générer, d'après les paramètres de charge, un premier signal de pilotage qui dure une première durée, et envoyer le premier signal de pilotage au convertisseur CC/CA (111) ;
ou,
générer, d'après les paramètres de charge, un second signal de pilotage qui dure une seconde durée, et envoyer le second signal de pilotage au convertisseur CC/CA (111) ;
o le convertisseur CC/CA (111) est conçu pour être dans l'état de fonctionnement pendant la première durée sous commande du premier signal de pilotage, et convertir la tension continue en une tension alternative haute fréquence dans l'état de fonctionnement ; ou pour être dans un état de non-fonctionnement pendant la seconde durée sous commande du second signal de pilotage, et sauter la conversion de la tension continue dans l'état de non-fonctionnement ; et
o l'émetteur sans fil (112) est conçu pour convertir, en un champ magnétique haute fréquence, la tension alternative haute fréquence qui est obtenue par conversion lorsque le convertisseur CC/CA (111) est dans l'état de fonctionnement, et transmettre le champ magnétique haute fréquence, dans lequel le champ magnétique haute fréquence est utilisé pour charger un composant de batterie (130) ;
o dans lequel le composant de commande (113) comprend un composant de génération de modulation, et le convertisseur CC/CA (111) est un circuit à structure en pont comprenant des transistors de commutation ; et
▪ le composant de génération de modulation est conçu pour envoyer le premier signal de pilotage qui dure la première durée au convertisseur CC/CA (111), dans lequel, lorsque le convertisseur CC/CA (111) commute de l'état de non-fonctionnement à l'état de fonctionnement sous commande du premier signal de pilotage, une onde fondamentale de la tension alternative haute fréquence et un angle de déphasage entre des tensions d'une branche de pont avant et d'une branche de pont arrière du convertisseur CC/CA (111) augmentent linéairement de zéro à une valeur prédéterminée, dans lequel la valeur prédéterminée est un angle qui permet au convertisseur CC/CA (111) d'implémenter une commutation douce, ou,
▪ le composant de génération de modulation est conçu pour envoyer le second signal de pilotage qui dure la deuxième durée au convertisseur CC/CA (111), dans lequel, lorsque le convertisseur CC/CA (111) commute de l'état de fonctionnement à l'état de non-fonctionnement sous commande du second signal de pilotage, une onde fondamentale de la tension alternative haute fréquence et un angle de déphasage entre des tensions d'une branche de pont avant et d'une branche de pont arrière du convertisseur CC/CA (111) diminuent linéairement d'une valeur prédéterminée à zéro,
dans lequel la valeur prédéterminée est un angle qui permet au convertisseur CC/CA (111) d'implémenter une commutation douce ;
o dans lequel le convertisseur CC/CA (111) comprend quatre transistors de commutation ;
lorsqu'un premier transistor de commutation (S1) et un quatrième transistor de commutation (S4) sont dans un premier état, et un deuxième transistor de commutation (S2) et un troisième transistor de commutation (S3) sont dans un second état, le convertisseur CC/CA (111) est dans l'état de fonctionnement ; lorsque le premier transistor de commutation (S1) et le troisième transistor de commutation (S3) sont dans le premier état, et le deuxième transistor de commutation (S2) et le quatrième transistor de commutation (S4) sont dans le second état, le convertisseur CC/CA (111) est dans l'état de non-fonctionnement ; et
le premier état est un état passant, et le second état est un état bloqué ; ou le premier état est un état bloqué, et le second état est un état passant.

2. Système selon la revendication 1, dans lequel un quotient de la première durée divisée par la seconde durée est égal à un quotient d'une puissance de sortie utile requise de l'extrémité de réception divisée par une puissance réelle qui est celle de l'extrémité de réception lorsque le convertisseur CC/CA est dans l'état de fonctionnement, et la puissance requise est une puissance qui est requise par la sortie utile dans un processus de charge.

3. Système selon l'une quelconque des revendications 1 et 2, dans lequel les paramètres de charge comprennent une valeur de tension requise, une valeur de courant requise, une valeur de courant échantillonnée, et une valeur de tension échantillonnée, et la valeur de tension requise est une valeur de tension qui est requise par la sortie utile de l'extrémité de réception dans le processus de charge ;
le composant de commande comprend un composant de calcul et le composant de génération de modulation, et le composant de génération de modulation est l'un quelconque d'un composant de commande de modulation d'impulsion en largeur PWM, d'un composant de commande de modulation de fréquence, ou d'un composant de commande de déphasage ;
le composant de calcul est conçu pour générer une première instruction de commande d'après les paramètres de charge lorsque la valeur de tension requise est inférieure à la valeur de tension échantillonnée ou la valeur de courant requise est inférieure à la valeur de courant échantillonnée ; ou générer une seconde instruction de commande d'après les paramètres de charge lorsque la valeur de tension requise est supérieure à la valeur de tension échantillonnée ou la valeur de courant requise est supérieure à la valeur de courant échantillonnée ; et
le composant de génération de modulation est conçu pour générer le premier signal de pilotage selon la première instruction de commande, et envoyer le premier signal de pilotage au convertisseur CC/CA ; ou est conçu pour générer le second signal de pilotage selon la seconde instruction de commande, et envoyer le second signal de pilotage au convertisseur CC/CA.

4. Système selon l'une quelconque des revendications 1 à 3, dans lequel le circuit de charge sans fil comprend en outre un compensateur, et le compensateur est situé entre le convertisseur CC/CA et l'émetteur sans fil ; et
le compensateur est conçu pour compenser la tension alternative haute fréquence délivrée en sortie par le convertisseur CC/CA, et délivrer en sortie la tension alternative haute fréquence stable à l'émetteur sans fil.
